# EUROPEAN PATENT SPECIFICATION

(11) **EP 3 647 122 B1**
(45) Date of publication and mention of the grant of the patent: **21.07.2021**
(21) Application number: 19202332.3
(22) Date of filing: 09.10.2019
(51) Int. Cl.: B60R 9/06, B60R 9/10

(54) **FOLDABLE BICYCLE CARRY RACK**
KLAPPBARER FAHRRADTRÄGER
CRÉMAILLÈRE DE SUPPORT DE BICYCLETTE PLIABLE

(30) Priority: 29.10.2018 TW 107214649 U
(43) Date of publication of application: 06.05.2020
(73) Proprietor: King Rack Industrial Co., Ltd., Taichung City (TW)
(72) Inventor: Wang, Chiu-Kuei, Taichung City (TW)
(74) Representative: Cabinet Chaillot

(56) References cited:
- GB-A- 2 511 602
- US-B2- 9 340 165

## Description

### BACKGROUND OF THE INVENTION

### 1. Fields of the invention

The present invention relates to a bicycle carry rack, and more particularly, to a foldable bicycle carry rack whose support units are secured when in use, and the support units are folded to save space.

### 2. Descriptions of Related Art

The conventional foldable bicycle carry rack is used to be installed to a vehicle to carry bicycles with the vehicle. Generally, the conventional foldable bicycle carry rack includes two support links extending from the main body of the bicycle carry rack, and bicycles are supported and secured on the support links. After the bicycles are removed from the bicycle carry rack, the extended links occupy a lot of space, and the links become a problem when parking. Document US 9340165 B2 discloses a bicycle carry rack according to the preamble of claim 1.

The present invention intends to provide a foldable bicycle carry rack wherein the support links are able to be pivotable upward and downward to eliminate the problems mentioned above.

### SUMMARY OF THE INVENTION

The present invention relates to a foldable bicycle carry rack as defined by the features of claim 1.

Preferably, a support member is connected to the first end of each support link so support a bicycle.

Preferably, each of the movable members has a connection hole through which the rod extends so that the two movable members are slid along the two support links when moving the rod.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show the foldable bicycle carry rack of the present invention;
Fig. 2 is an exploded view to show the foldable bicycle carry rack of the present invention;
Fig. 3 shows that the locking member is separated from the bar;
Fig. 4 shows that the two support units are folded;
Fig. 5 shows that the movable members are slid along the support links;
Fig. 6 shows that the locking members are to be pivoted to lock onto the bars of the base, and
Fig. 7 shows that the locking members are locked onto the bars of the base.

### DETAILED DESCRIPTION OF THE PREFERRED EMBODIMENT

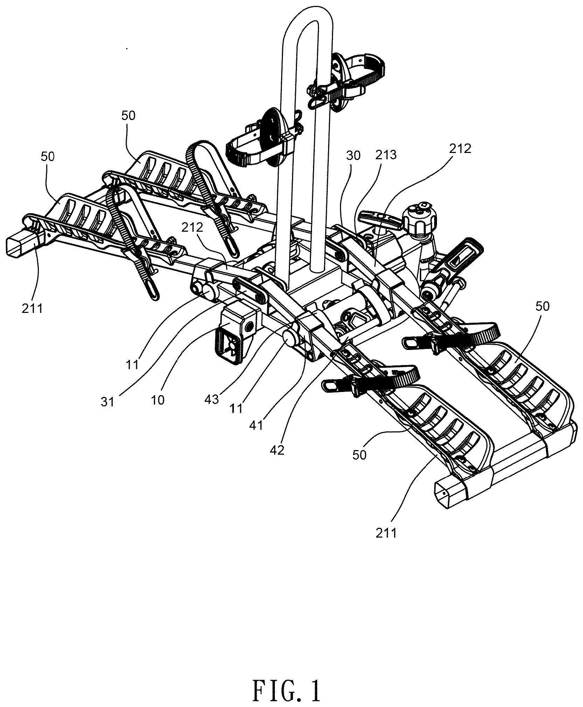

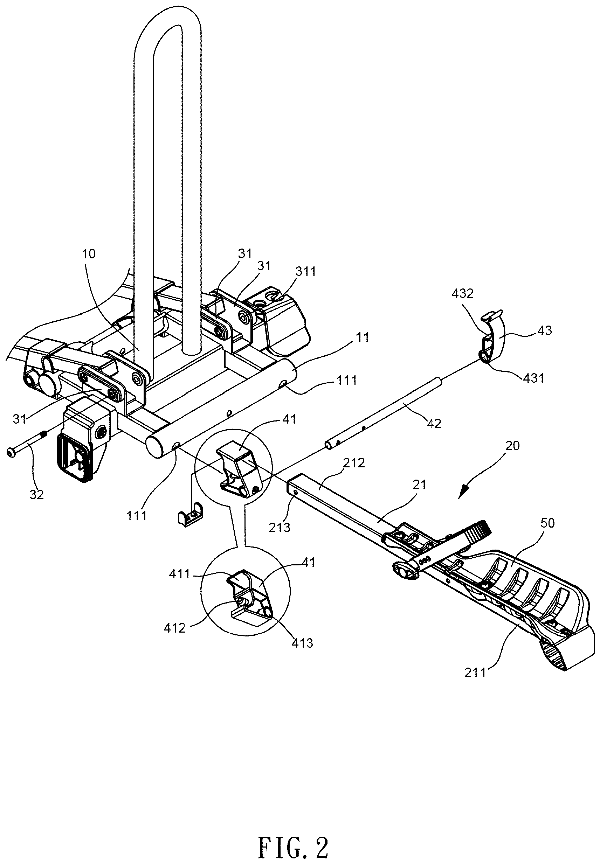

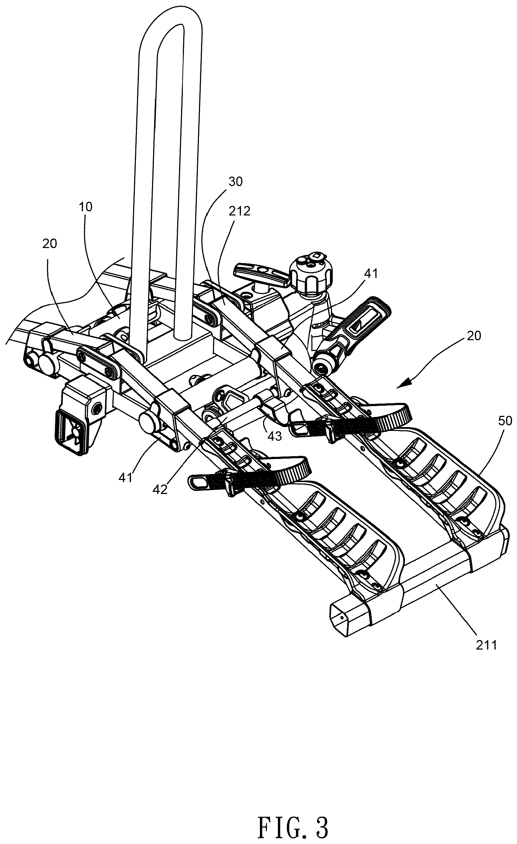

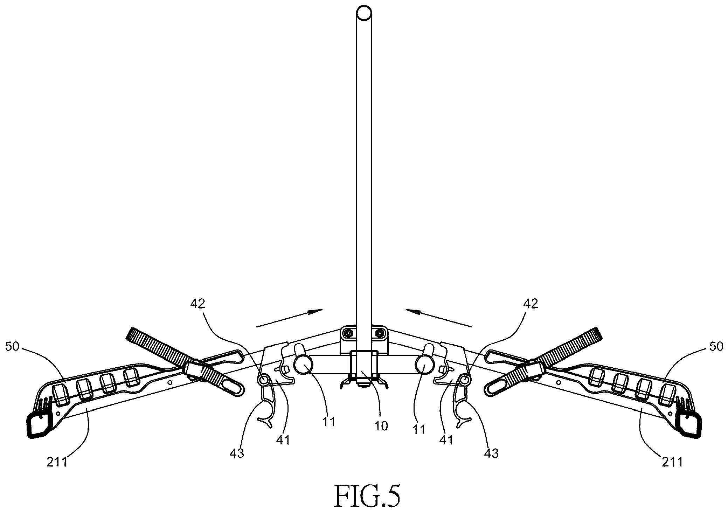

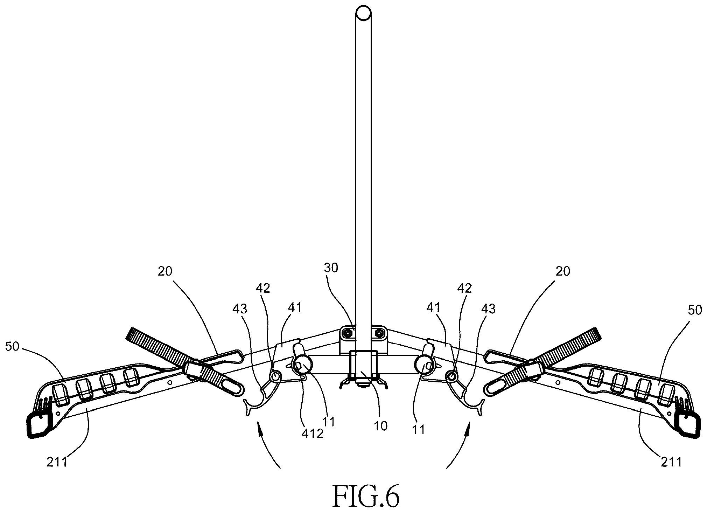

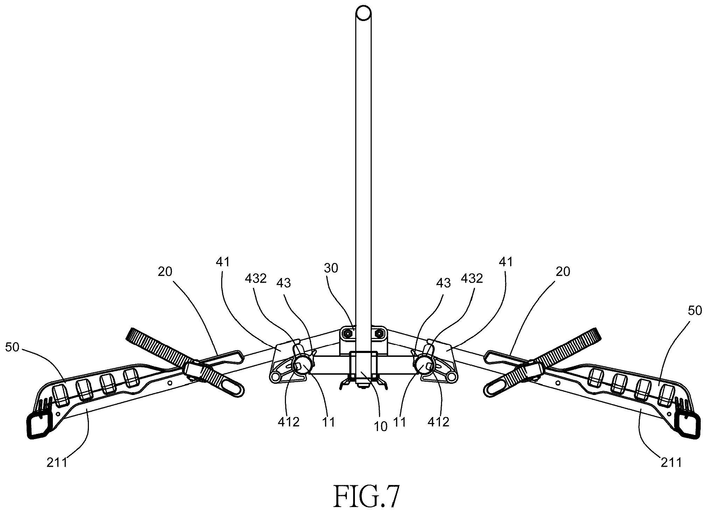

Referring to Figs. 1 to 7, the foldable bicycle carry rack of the present invention comprises a base 10 that has two bars 11 which are respectively connected to two ends of the base 10, and each bar 11 has two first holes 111 defined radially therein as shown in Fig. 2.

Two support units 20 are respectively and pivotably connected to the two end of the base 10. Each support unit 20 includes two support links 21. Each support link 21 includes a first end 211 and a second end 212, wherein a support member 50 is connected to the first end 211 of each support link 21 so as to support a wheel of a bicycle (not shown). The second end 212 of each support link 21 includes a lateral hole 213 defined therethrough.

Two seat units 30 are respectively connected to two sides of the base 10, and each seat unit 30 has a U-shaped reception member 31 which has two second holes 311. The two respectively second ends 212 of the two support links 21 of each of the two support units 20 are pivotably connected to the two reception members 31 by extending a pin 32 through the second holes 311 of the two support links 21 and the lateral holes 213 of the two reception members 31. Therefore, the support unit 20 is foldable about the pin 32.

Each of the support links 21 has a movable member 41 slidably mounted between the first and second ends 211, 212 thereof. The movable member 41 includes a passage 411, a protrusion 412 and connection hole 413, wherein the axis of the connection hole 413 is perpendicular to that of the passage 411 as shown in Fig. 2. The support link 21 movably extends through the passage 41 corresponding thereto, and the protrusion 412 of each movable member 41 is removably engaged with the first hole 111 corresponding thereto. When the protrusion 412 of each movable member 41 is engaged with the first hole 111 of the bar 11, the support unit 20 cannot be folded about the pin 32.

Two rods 42 are respectively connected to the two support units 20. Specifically, each rod 42 extends through the two respective connection hole 413 of the two movable members 41 that are connected to the two support links 21 of each of the two support units 20. Therefore, the two movable members 41 are slid along the two support links 21 when moving the rod 42.

A locking member 43 is connected to each of the two rods 42 and includes a pivotable end 431 and a locking portion 432. The pivotable end 431 is pivotably connected to the rod 42 corresponding thereto, and the locking portion 432 is detachably locked to the bar 11 corresponding thereto.

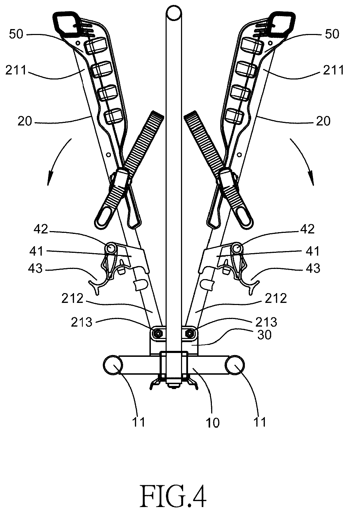

As shown in Figs. 4 to 7, when in use, the two support units 20 are pivoted downward about the respective pins 32 and the uses than move the two rods 42 to move the movable members toward the bars 11 to engage the protrusions 412 with the first holes 111 of the bars 11. The locking members 43 are then pivoted to allow the locking portions 432 to lock on the bars 11. Therefore, the support units 20 are expanded and bicycles (not shown) are supported by the support units 20.

When not in use, the steps mentioned above is proceeded in reverse sequence so that the two support units 20 are pivoted upward.

## Claims

1. A foldable bicycle carry rack comprising:
a base (10) having two bars (11) respectively connected to two ends thereof, each bar (11) having two first holes (111) defined radially therein, two support units (20) respectively and pivotably connected to the two ends of the base (10), two seat units (30) respectively connected to two sides of the base (10), each support unit including two support links (21), each support link (21) including a first end (211) and a second end (212), the second end (212) of each support link (21) including a lateral hole (213) defined therethrough, each seat unit having a U-shaped reception (31) member which has two second holes (311), the two respectively second ends (212) of the two support links (21) of each of the two support units (20) pivotably connected to the two reception members (31) by extending a pin through the second holes (311) of the two support links (21) and the lateral holes (213) of the two reception members (31);
**characterised in that** each of the support links (21) having a movable member (41) slidably mounted between the first and second ends (212) thereof, the movable member (41) having a passage (411) and a protrusion (412), the support link (21) movably extending through the passage (411) corresponding thereto, the protrusion (412) of each movable member (41) is removably engaged with the first hole corresponding thereto, and
two rods (42) respectively connected to the two support units (20), each rod (42) connected between the two movable members (41) that are connected to the two support links (21) of each of the two support units (20), a locking member (43) connected to each of the two rods (42) and including a pivotable end (431) and a locking portion (432), the pivotable end (431) pivotably connected to the rod (42) corresponding thereto, and the locking portion (432) detachably locked to the bar (11) corresponding thereto.

2. The foldable bicycle carry rack as claimed in claim 1, wherein a support member (50) is connected to the first end (211) of each support link (21).

3. The foldable bicycle carry rack as claimed in claim 1, wherein each of the movable members (41) has a connection hole (413) through which the rod (42) extends so that the two movable members (41) are slid along the two support links (21) when moving the rod (42).

## Patentansprüche

1. Klappbarer Fahrradträger, umfassend:
eine Basis (10) mit zwei Stangen (11), die jeweils mit zwei Enden davon verbunden sind, wobei jede Stange (11) zwei erste Löcher (111) aufweist, die radial darin definiert sind, zwei Stützeinheiten (20), die jeweils und schwenkbar mit den zwei Enden der Basis (10) verbunden sind, zwei Sitzeinheiten (30), die jeweils mit zwei Seiten der Basis (10) verbunden sind, wobei jede Stützeinheit zwei Stützverbindungen (21) beinhaltet, wobei jede Stützverbindung (21) ein erstes Ende (211) und ein zweites Ende (212) beinhaltet, wobei das zweite Ende (212) jeder Stützverbindung (21) ein seitliches Loch (213) beinhaltet, das dadurch definiert ist, wobei jede Sitzeinheit ein U-förmiges Aufnahmeelement (31) aufweist, das zwei zweite Löcher (311) aufweist, die zwei jeweils zweiten Enden (212) der zwei Stützverbindungen (21) jeder der zwei Stützeinheiten (20) schwenkbar mit den zwei Aufnahmeelementen (31) durch die Erweiterung eines Stifts durch die zweiten Löcher (311) der zwei Stützverbindungen (21) und die seitlichen Löcher (213) der zwei Aufnahmeelemente (31) verbunden sind;
**dadurch gekennzeichnet, dass**
jede der Stützverbindungen (21) ein bewegliches Element (41) aufweist, das gleitbar zwischen den ersten und zweiten Enden (212) davon montiert ist, wobei das bewegliche Element (41) einen Durchgang (411) und einen Vorsprung (412) aufweist, wobei sich die Stützverbindung (21) beweglich durch den Durchgang (411) erstreckt, die dieser entspricht,
der Vorsprung (412) jedes beweglichen Elements (41) entfernbar mit dem ersten Loch, das diesem entspricht, eingegriffen ist, und
zwei Stangen (42) jeweils mit den zwei Stützeinheiten (20) verbunden sind, jede Stange (42) zwischen den zwei beweglichen Elementen (41) verbunden ist, die mit den zwei Stützverbindungen (21) jeder der zwei Stützeinheiten (20) verbunden sind, ein Verriegelungselement (43) mit jeder der zwei Stangen (42) verbunden ist und ein schwenkbares Ende (431) und einen Verriegelungsabschnitt (432) beinhaltet, das schwenkbare Ende (431) schwenkbar mit der Stange (42) verbunden ist, die diesem entspricht, und der Verriegelungsabschnitt (432) entfernbar mit der Stange (11) verriegelt ist, die diesem entspricht.

2. Klappbarer Fahrradträger nach Anspruch 1, wobei ein Stützelement (50) mit dem ersten Ende (211) jeder Stützverbindung (21) verbunden ist,

3. Klappbarer Fahrradträger nach Anspruch 1, wobei jedes der beweglichen Elemente (41) ein Verbindungsloch (413) aufweist, durch das sich die Stange (42) erstreckt, so dass die zwei beweglichen Elemente (41) entlang den zwei Stützverbindungen (21) geglitten werden, wenn die Stange (42) bewegt wird.

## Revendications

1. Porte-bicyclette pliable comprenant :
une base (10) ayant deux barres (11) respectivement reliées à deux extrémités de celle-ci, chaque barre (11) ayant deux premiers trous (111) définis radialement à l'intérieur de celle-ci, deux unités de support (20) respectivement reliées de manière pivotante aux deux extrémités de la base (10), deux unités de siège (30) respectivement reliées à deux côtés de la base (10), chaque unité de support comprenant deux tringles de support (21), chaque tringle de support (21) comprenant une première extrémité (211) et une seconde extrémité (212), la seconde extrémité (212) de chaque tringle de support (21) comprenant un trou latéral (213) défini à travers celle-ci, chaque unité de siège ayant un élément de réception en forme de U (31) qui a deux seconds trous (311), les deux secondes extrémités respectives (212) des deux tringles de support (21) de chacune des deux unités de support (20) étant reliées de manière pivotante aux deux éléments de réception (31) par extension d'une broche à travers les seconds trous (311) des deux tringles de support (21) et les trous latéraux (213) des deux éléments de réception (31) ;
**caractérisé par le fait que**
chacune des tringles de support (21) a un élément mobile (41) monté de manière coulissante entre les première et seconde extrémités (212) de celle-ci, l'élément mobile (41) ayant un passage (411) et une saillie (412), la tringle de support (21) s'étendant de manière mobile à travers le passage (411) correspondant à celle-ci, la saillie (412) de chaque élément mobile (41) étant engagée de manière amovible avec le premier trou correspondant à celle-ci, et
deux tiges (42) sont respectivement reliées aux deux unités de support (20), chaque tige (42) étant reliée entre les deux éléments mobiles (41) qui sont reliés aux deux tringles de support (21) de chacune des deux unités de support (20), un élément de verrouillage (43) étant relié à chacune des deux tiges (42) et comprenant une extrémité pivotante (431) et une partie de verrouillage (432), l'extrémité pivotante (431) étant reliée de manière pivotante à la tige (42) correspondant à celle-ci, et la partie de verrouillage (432) étant verrouillée de manière détachable à la barre (11) correspondant à celle-ci.

2. Porte-bicyclette pliable selon la revendication 1, dans lequel un élément de support (50) est relié à la première extrémité (211) de chaque tringle de support (21).

3. Porte-bicyclette pliable selon la revendication 1, dans lequel chacun des éléments mobiles (41) a un trou de liaison (413) à travers lequel la tige (42) s'étend, de telle sorte que les deux éléments mobiles (41) sont amenés à coulisser le long des deux tringles de support (21) lorsque la tige (42) se déplace.
